Europäisches Patentamt

European Patent Office

Office européen des brevets

(11) Veröffentlichungsnummer: **0 129 648**
**B1**

## (12) EUROPÄISCHE PATENTSCHRIFT

(45) Veröffentlichungstag der Patentschrift :
06.07.88

(21) Anmeldenummer : 84103607.2

(22) Anmeldetag : 01.04.84

(51) Int. Cl.⁴ : **H 04 N   5/44**

(54) **Fernsehempfänger mit Texteinblendung.**

(30) Priorität : 02.04.83 DE 3312097

(43) Veröffentlichungstag der Anmeldung :
02.01.85 Patentblatt 85/01

(45) Bekanntmachung des Hinweises auf die Patenterteilung : 06.07.88 Patentblatt 88/27

(84) Benannte Vertragsstaaten :
**AT BE CH FR GB IT LI LU NL SE**

(56) Entgegenhaltungen :
EP-A- 0 039 554
DE-B- 2 949 020
GB-A- 2 062 401

(73) Patentinhaber : Deutsche Thomson-Brandt GmbH
Hermann-Schwer-Strasse 3 Postfach 1307
D-7730 Villingen-Schwenningen (DE)

(72) Erfinder : Gleim, Günter
Terra-Wohnpark 8
D-7730 Villingen-Schwenningen 24 (DE)
Erfinder : Quandt, Siegfried
Am Warenberg 20
D-7730 Villingen Schwenningen (DE)

**Beschreibung**

Die Erfindung betrifft eine Bildwiedergabeanordnung nach dem Oberbegriff des ersten Anspruchs.

Aus der DE-C-3 038 144 ist es bekannt, ein Bildsignalgemisch auf einem Bildschirm wiederzugeben, das sich aus Bildern beispielsweise aus einem Fernsehprogramm, also dem von einem Fernsehsender ausgestrahlten normalen Bild, etwa einer bewegten Szene, und diesem überlagerten lesbaren Zeichen, Zeichenelementen und graphischen Zeichen oder Symbolen aus einem Btx-Decoder oder einer Teletext-Decodierschaltung zusammensetzt. Bei diesem Überlagern des Bildsignalgemischs wird an Stellen der Einblendung eine störende Unruhe in vertikaler Richtung an den geschriebenen horizontalen Zeilen der Zeichen und Symbole wahrgenommen, wie es in Spalte 3, Zeilen 12-32 der genannten Schrift detailliert wird. Demgemäß lag der Erfindung nach dem genannten Patent die Aufgabe zugrunde, eine Bildwiedergabeanordnung anzugeben, bei der die Erscheinung des Zitterns bei der Wiedergabe von digital erzeugter Bild- und/oder Textinformation weitgehend beseitigt ist. Die Lösung sieht vor, durch eine Schaltungsanordnung zum Erzeugen eines bildfrequenten Signals zum derartigen zusätzlichen Ablenken in der vertikalen Richtung eines oder mehrerer in der Bildwiedergaberöhre erzeugter Elektronenstrahlen zu bewirken, daß in dem die digital erzeugten Bild- und/oder Textinformationen wiedergebenden Bildteil die entsprechenden Zeichen aufeinanderfolgender Halbbilder auf der Bildwiedergaberöhre zusammenfallend geschrieben werden.

Der bekannten Lösung liegt die Erkenntnis zugrunde, daß Schaltungsanordnungen zur Verringerung des Zitterns, die dem Ablenkteil der Bildwiedergabeanordnung zugeordnet werden, einfacher sein können als Schaltungsanordnungen in dem Signalverarbeitungsteil. Durch diese Maßnahme wird die Ursache, nämlich der Zeilensprung, der störenden Erscheinung beseitigt, jedoch nur in einem Teil des Bildes, in welchem Überlagerung von Bild und Text auftritt.

Grundsätzlich sind zwei Methoden zum Abschalten des Zeilensprungs bekannt. Aus der DE-B-2 949 020 ist ein Verfahren bekannt, das nach dem Zwischenzeilenverfahren arbeitet und das vorne am FBS-Signal den Zeilensprung durch Offset kompensiert, indem das zweite Halbbild mit mit seinem Zeilenraster durch Vertikalversatz zur Deckung mit dem Zeilenraster des ersten Halbbildes gebracht wird. Diese Methode läßt sich auch bei Systemen realisieren, die die Textinformation über eine allgemein eingeführte Steckverbindung (Scart) dem Monitor zuführt, da die nötigen Signalleitungen ohnehin vorhanden sind und damit die Signalleitung enthält. Die andere bekannte Lösung (Philips, GB-A-2 062 401 entspricht FR-A-2 467 517 oder DE-A-3 038 144), sieht die Erzeugung einer Offset-Spannung vor, die bei jedem 2. Halbbild auf die Ablenkspulen wirkt. Sie wird bei im FS-Gerät eingebautem Teletext- oder BTX-Decoder angewendet. Dabei ist die Bildwiedergabeanordnung für die Wiedergabe von FS-Signalen einer üblichen Norm ein Signal zu übermitteln, aufgrund dessen der Zeilensprung im Gerät abgeschaltet wird. Es ist dann eine zusätzliche Signalleitung dafür nötig.

Neuere Texteinblendungssysteme wie BTX bieten zusätzlich die Möglichkeit des sogenannten Mix- und Box-Betriebes. Darunter versteht man eine Übertragung eines Bildsignalgemisches, wobei die überlagerten Zeichen- und/oder Texte bei Box-Betrieb von einer Linie kastenförmig mit einem Farb- oder Helligkeitskontrast hinterlegt werden, während bei Mix-Betrieb eine solche Hinterlegung unterbleibt.

Bis jetzt bekannt gewordene Systeme arbeiten bei Mix- und Box-Betrieb mit dem Zeilensprungverfahren für beide Informationen.

Es hat sich nun gezeigt, daß es für den Betrachter von Einblendungen wesentlich weniger störend ist, wenn die Hintergrundinformation, also das zweitrangige Fernsehbild, über den gesamten Bildschirm nicht mit Zeilensprung wiedergegeben wird, weil :

1. die Information dynamisch ist, d. h. sie enthält bewegte Bilder, also keine statischen Wiedergaben ;

2. die Information nicht zeilengebunden ist, d. h. diese sich laufend ändernde Information ist nicht zeilengebunden, und es ist deshalb weit weniger störend, wenn der Zeilensprung abgeschaltet ist.

Hieraus ergab sich die der Erfindung zugrunde liegende Aufgabe, nämlich eine Bildwiedergabeanordnung derart auszuführen, daß das störende Zittern in der Wiedergabe von Text- und Zeicheninformationen speziell bei Mix- und Box-Betrieb vermieden wird.

Die Lösung dieser Aufgabe ergibt sich gemäß dem Kennzeichen des Hauptanspruchs.

Weitere Einzelheiten enthüllt das Merkmal des Unteranspruchs.

In der neuen Anordnung wird der Zeilensprung nicht nur während des reinen Textbetriebes angeschaltet, sondern auch im Mix- und Box-Betrieb.

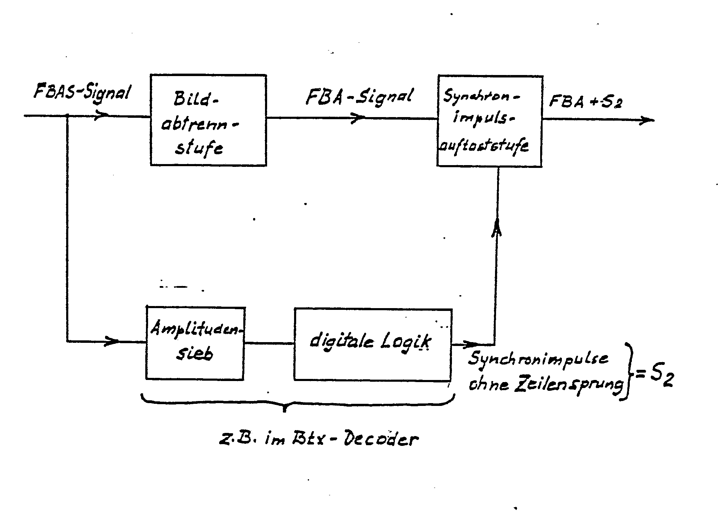

Dabei wird z. B. ein an sich bekanntes Schaltungsverfahren angewendet, nämlich die Trennung der Bildinformation von den mit Zeilensprung ausgestatteten Synchronsignalen und nachfolgende Auftastung von Synchronsignalen ohne Zeilensprung. Diese letztere Aufbereitung geschieht, indem beispielsweise der digitalen Logik des Btx-Decoders oder Teletext-Decoders entsprechende Synchronsignale entnommen werden wie es beispielsweise in der Figur (St. d. T.) dargestellt ist. Die Bildabtrennstufe sowie die Synchronimpulsauftaststufe können im Decoder eingebaut oder auch integriert werden.

Mit anderen Worten wird das normale Fernsehbild so lange mit Zeilensprung wiedergegeben wie es erstrangig ist, weil keine Bildzeichen-und/oder Textinformation eingeblendet wird. Erst wenn der Betrachter sich entscheidet, Teletext oder Btx-Signale einblenden zu wollen und diese Wiedergabeart durch Einschalten des entsprechenden Decoders vorwählt, löst er durch Betätigung einer der Tasten der Teletext- oder Btx-Tastatur die Abschaltung des Zeilensprungs aus. Sobald seine Kommunikation beendet ist, wird das Fernsehbild, da nunmehr wieder ohne Einblendung, wieder vorrangig und deshalb wie üblich mit Zeilensprung über den ganzen Bildschirm wiedergegeben.

**Patentansprüche**

1. Bildwiedergabeanordnung für die wahlweise alternative oder gleichzeitige Wiedergabe von sowohl Fernsehsignalen nach einer der üblichen Fernsehnormen als auch von digital erzeugten Bild- und/oder Textinformationssignalen, wobei unter Anwendung eines beliebigen Verfahrens hinsichtlich der Art und Weise der technischen Durchführung der Abschaltung der Zeilensprung abgeschaltet werden kann, dadurch gekennzeichnet, daß in der Betriebsart Videoinformation in einer üblichen Fernsehnorm und/oder Einblendung digital erzeugter Bild- und/oder Text- und-/oder Zeichen- und/oder Mix- und/oder Boxbetrieb der Zeilensprung zwangsweise für den ganzen Bildschirm abgeschaltet bleibt, unabhängig davon, ob eine Videoinformation nach einer der üblichen Fernsehnormen auf dem Bildschirm sichtbar ist oder nicht.

2. Bildwiedergabeanordnung gemäß Anspruch 1, dadurch gekennzeichnet, daß bei aktivem Decoder und keiner Einglendinformation der Zeilensprung wieder eingeschaltet werden kann.

**Claims**

1. An image reproduction arrangement for the selectively alternate or simultaneous reproduction both of television signals in accordance with one of the usual television standards and of digitally produced picture and/or text information signals, wherein the line interlacing can be switched off using any desired method with regard to the technical mode of carrying out the switching off, characterised in that in the operating mode video information in a usual television standard and/or fade-in of digitally produced picture and/or text and/or symbol and/or mix and/or box operation, the line interlacing necessarily remains switched off for the whole viewing screen regardless of whether video information according to one of the usual television standards is visible on the viewing screen or not.

2. An image reproduction arrangement according to Claim 1, characterised in that with an active decoder and no fade-in information, the line interlacing can be switched on again.

**Revendications**

1. Dispositif de restitution d'images pour la restitution au choix alternative ou simultanée aussi bien de signaux de télévision correspondant à l'une des normes usuelles de télévision que de signaux d'informations d'images et/ou de textes, produits sous forme numérique, et dans lequel l'entrelacement des lignes peut être supprimé moyennant la mise en œuvre de n'importe quel procédé en ce qui concerne l'exécution technique de cette suppression, caractérisé en ce que, dans le mode de fonctionnement avec production d'une information vidéo conformément à une norme usuelle de télévision et/ou surimpression de signaux produits numériquement dans le cas du fonctionnement avec des images et/ou des textes et/ou des caractères et/ou dans le cas d'un fonctionnement Mix et/ou Box, l'entrelacement des lignes reste obligatoirement supprimé pour l'ensemble de l'écran, indépendamment du fait qu'une information vidéo conforme à l'une des normes usuelles de télévision soit visible ou non sur l'écran.

2. Dispositif de restitution d'images selon la revendication 1, caractérisé en ce que dans le cas où un décodeur est actif et où aucune information de surimpression n'est présente, l'entrelacement des lignes peut être à nouveau branché.

FBAS-Signal
| Bild-
abtrennstufe |

FBA-Signal
| Synchron-
impulsauftaststufe |

FBA + S₂

| Amplituden-
sieb |
| digitale Logik |

Synchronimpulse
ohne Zeilensprung } = S₂

z.B. im Btx - Decoder